# EUROPÄISCHE PATENTSCHRIFT

(11) **EP 2 116 740 B1**
(45) Veröffentlichungstag und Bekanntmachung des Hinweises auf die Patenterteilung: **30.04.2014**
(21) Anmeldenummer: 09005453.7
(22) Anmeldetag: 17.04.2009
(51) Int. Cl.: B64G 1/14, B64G 1/64, F16F 15/04

(54) **Feder-Dämpfungssystem**
Spring damping system
Système d'amortissement à ressort

(30) Priorität: 07.05.2008 DE 102008022467
(43) Veröffentlichungstag der Anmeldung: 11.11.2009
(73) Patentinhaber: Astrium GmbH, 85521 Ottobrunn (DE)
(72) Erfinder: Retat, Ingo, Dr., 28832 Achim (DE); Abdoly, Kiyoumars, 28215 Bremen (DE); Köhler, Horst, 28279 Bremen (DE); Tritsch, Wolfgang, 28201 Bremen (DE)
(74) Vertreter: Hansmann, Dierk

(56) Entgegenhaltungen:
- DE-B3-102006 054 274
- US-A1- 2004 036 002

## Beschreibung

Die Erfindung besteht aus einem Feder-Dämpfungssystem in 3-Achsen für Lastplattformen als Haltestruktur in Raumfahrzeugen zur Aufnahme von Nutzlasten über Paletten, wobei mehrere Feder-Dämpfungselemente zugeordnet sind.

Zum Transport zu einer Raumstation werden Nutzlasten zum Teil über Haltevorrichtungen aufgenommen, die eine Entnahme der Einheit aus einem Space Shuttle mit Hilfe eines Roboters ermöglicht. Hierbei sind üblicherweise auf einer Platte montierte Nutzlasten auf Lastplattformen im Space Shuttle aufgeschraubt. Eine Aufnahme der Lastplattform als Haltestruktur erfolgt in bekannter Weise unter zwischenschaltung eines Feder-Dämpfungssystems, wie es aus der DE 10 2006 054 274 B3 bekannt ist. Dabei wird eine Unterdrückung von Wankbewegungen in zwei Achsen und eine unabhängige Anpassung von Federung und Dämpfung in allen drei Achsen ermöglicht.

Dieser Aufwand ist für eine Durchführung der Dämpfung sehr niedriger Frequenzen der aufgenommenen Nutzlasten relativ aufwendig, da mit der bekannten Ausbildung zusätzlich weitere Forderungen erfüllt werden.

Die Aufgabe der Erfindung ist es, eine Palette mit Nutzlasten auf eine Lastplattform als Haltestruktur durch Federelemente zur Vermeidung von mittel- bis hochfrequenten Beanspruchungen auf einfache Weise zu schaffen, die einen Einsatz in der Raumfahrt gewährleisten.

Die Lösung dieser Aufgabe erfolgt erfindungsgemäß dadurch, daß die Palette mit Nutzlasten über Feder-Dämpfungselemente angeordnet und jedes Feder-Dämpfungselement durch von der Haltestruktur ausgehende Bolzen mit einem Schaft gebildet ist, der durch eine Aufnahmeöffnung der Palette geführt ist und auf den Schaft des Bolzens jeweils zwischen einer Topfaufnahme und einer Endkappe mindestens zwei hintereinander liegende Feder-Dämpfungs-Kissen angeordnet sind, die beiderseits eines Gegenlagers in der Aufnahmeöffnung angeordnet sowie über ein außenliegendes Einstellelement, wie eine Mutter, am Schaft mit einer einstellbaren Vorspannung gehalten sind.

Hierdurch ist es möglich, durch eine einfache Anordnung von der Lastplattform als Haltestruktur übertragenden niederfrequenten Beanspruchungen in drei Achsen herabzusetzen.

Eine einfache Ausbildung besteht darin, daß die Feder-Dämpfungs-Kissen aus einem Metallgeflecht mit Fasern aus Litzen gebildet sind.

Zur verbesserten Lagerung und Einstellung wird vorgeschlagen, daß die dem Gegenlager als Steg zugeordneten Endkappen Aufnahmen aufweisen, wobei die Endkappen eine Durchtrittsöffnung unter Bildung eines Abstandes zum Schaft besitzen.

Zur Verbesserung der Linearisierung des Feder-Dämpfungs-Kissen ist vorgesehen, daß Tellerfedern mit Scheibenelementen am Feder-Dämpfungs-Kissen als Zwischenlagen anliegen.

Ferner wird vorgeschlagen, daß die Höhe der gebildeten Randzonen der Topfaufnahmen und/oder Endkappen in Anpassung einer geforderten radialen Steifigkeit der Feder-Dämpfungs-Kissen bemessen sind.

In der Zeichnung ist ein Ausführungsbeispiel der Erfindung schematisch dargestellt. Es zeigen:

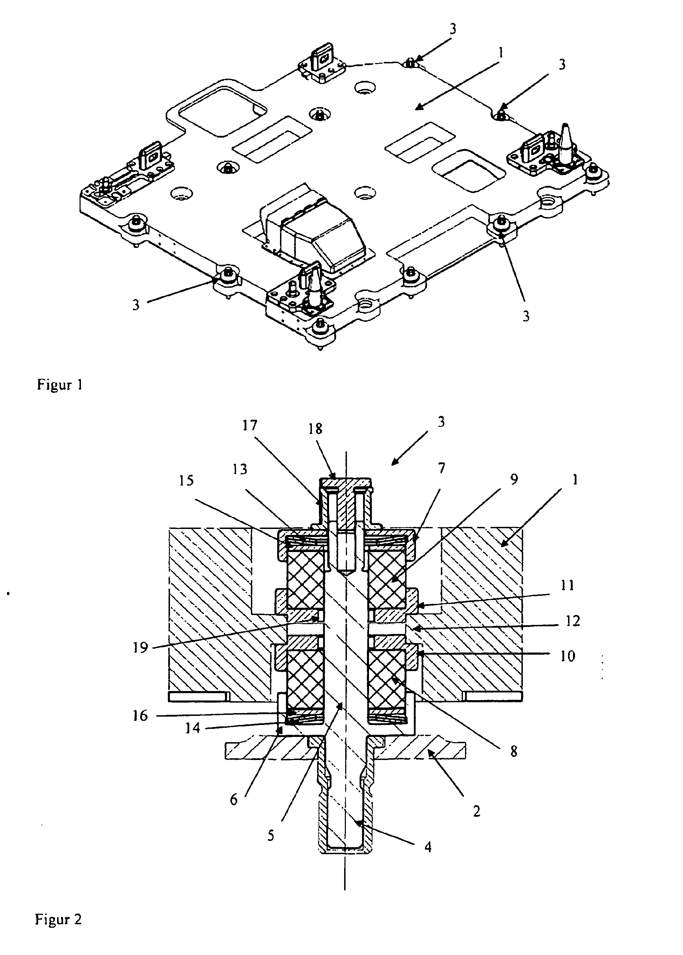

- Fig. 1: eine Draufsicht auf eine Lastplattform als Haltestruktur mit mehreren eingesetzten Feder-Dämpfungselementen und
- Fig. 2: eine Schnittdarstellung durch ein Federdämpfungselement zwischen einer Lastplattform und einer aufgesetzten Palette für Nutzlasten.

Bei der Ausführung eines niederfrequenten Feder-Dämpfungssystems in einem Space Shuttle ist eine Palette 1 für Nutzlasten auf einer Lastplattform 2 über zwischengeschaltete Federdämpfungselemente 3 angeordnet.

Jedes Federdämpfungselement 3 wird durch einen Bolzen 4 gebildet, über den die Kraft vom Schwingungs-Erreger durch einen Schaft 5 und jeweils über eine Topfaufnahme 6,7 an hintereinander liegende Feder-Dämpfungs-Kissen 8 und 9 weitergeleitet. Hierbei sind jeweils Endkappen 10, 11 zwischengeschaltet, die die Kraft über einen Steg 12 als Gegenlager an das zu dämpfende Element der Palette 1 weitergeben. Mit Hilfe von Tellerfedern 13, 14 werden die Feder-Dämpfungs-Kissen 8, 9 über Unterlegscheiben 15, 16 vorgespannt. Die Größe der Vorspannung wird dabei über eine Mutter 17 eingestellt. Die Mutter 17 wird nach der Einstellung in ihrer Lage durch kontern mit Hilfe einer Schraube 18 fixiert.

Im Betrieb werden radiale Kräfte über beide Feder-Dämpfungs-Kissen 8, 9 weitergeleitet. Axiale Kräfte werden - entsprechend dem Vorzeichen - über eines der Feder-Dämpfungs-Kissen 8, 9 weitergeleitet. In vielen Fällen ist eine Vorspannung der Feder-Dämpfungs-Kissen 8, 9 erwünscht, um bei Belastung in axialer Richtung einen Spalt zwischen einem der Feder-Dämpfungs-Kissen 8, 9 und der korrespondierenden Endkappen 10, 11 zu vermeiden.

Die Feder-Dämpfungs-Kissen 8, 9 sind aus einem Metallgeflecht mit Fasern aus Litzen gebildet. Da diese Feder-Dämpfungs-Kissen normalerweise eine nichtlineare -progressive Kennlinie haben, kann in axialer Richtung auch die Federkonstante und damit die Eigenfrequenz des Systems über Vorspannung der Feder-Dämpfungs-Kissen verändert werden. Hierzu wird entsprechend die Mutter 17 eingestellt. Die Tellerfedern 13, 14 sorgen dafür, daß auch dann kein Spalt zwischen einem der Federkissen 8, 9 und der korrespondierenden Endkappe 10, 11 entsteht, wenn nach Entlastung eines der Feder-Dämpfungs-Kissen 8, 9, bedingt durch die innere Reibung, nicht mehr exakt in seinen Ruhezustand zurückkehrt, sondern einige zehntel mm davor verbleibt. Des weiteren kann mit Hilfe der nichtlinearen - degressiven - Charakteristik der Tellerfedern 13, 14 eine teilweise Linearisierung des Gesamtsystems erreicht werden. Die anti-symmetrische Belastung der zwei Feder-Dämpfungs-Kissen 8, 9 in axialer Richtung bewirkt bereits eine teilweise Linearisierung. Von den nichtlinearen Termen in der Federkennlinie heben sich die geraden Terme beider Feder-Dämpfungs-Kissen auf und es verbleiben nur noch ungerade Terme.

In radialer Richtung erfolgt die Kraft-Einleitung in die Feder-Dämpfungs-Kissen 8, 9 über den Schaft 5 und die Topfaufnahmen 6, 7. Die Kraft wird dann über die Endkappen 10, 11 von den Feder-Dämpfungs-Kissen 7 und 8 in die Palette 1 über den Steg 12 weitergeleitet. Auch in radialer Richtung werden Kräfte zum großen Teil über Kompression durch Feder-Dämpfungs-Kissen weitergeleitet und nur zu einem geringen Teil über Schub. Dieses ist vorteilhaft, da die Tragfähigkeit der Feder-Dämpfungs-Kissen 8, 9 bei Schubbelastung geringer ist als bei Druckbelastung. Die Steifigkeit läßt sich über die Höhe der druckübertragenden Elemente in radialer Richtung beeinflussen. Die Größe der Vorspannung läßt sich, wie ausgeführt, über die Mutter 17 einstellen. Für die Sicherung dieser Einstellung gegenüber Vibrationen ist ein Rezeß am Schaft 5 vorgesehen, gegen den die Mutter 17 geschraubt wird und dann über eine hinreichende Vorspannung gegen eine Lösung unter Vibration gesichert wird. Ein korrekter Abstand zwischen den Feder-Dämpfungs-Kissen 8, 9, und damit die Vorspannung, muß über Distanzringe am Rezeß eingestellt werden.

Es kann selbstverständlich der Abstand auch nur über die Mutter 17 eingestellt werden und das Verdrehen unter Vibrationslasten wird dabei durch eine Konterschraube 18 verhindert. Diese Schraube 18 ist mit einem Links-Gewinde versehen, so daß ein gemeinsames Verdrehen von Mutter 17 und Schraube 18 geometrisch verhindert wird. Zusätzlich ist vorgesehen, daß die Mutter 17 und die Schraube 18 mit Hilfe selbstsichernder Gewindeeinsätze gegen Verdrehen gesichert wird.

## Patentansprüche

1. Feder-Dämpfungssystem in 3-Achsen für Lastplattforznen als Haltestruktur in Raumfahrzeugen zur Aufnahme von Nutzlasten über Paletten, wobei mehrere Feder-Dämpfungselemente zugeordnet sind, **dadurch gekennzeichnet, daß** die Palette (1) mit Nutzlasten über Feder-Dämpfungselemente (3) angeordnet und jedes Feder-Dämpfungselement durch von der Haltestruktur (2) ausgehende Bolzen (4) mit einem Schaft (5) gebildet ist, der durch eine Aufnahmeöffnung der Palette (1) geführt ist und auf den Schaft (5) des Bolzens (4) jeweils zwischen einer Topfaufnahme (6, 7) und einer Endkappe (10, 11) mindestens zwei hintereinander liegende Feder-Dämpfungs-Kissen (8, 9) angeordnet sind, die beiderseits eines Gegenlagers (12) in der Aufnahmeöffnung angeordnet sowie über ein außenliegendes Einstellelement (17), wie eine Mutter, am Schaft (5) mit einer einstellbaren Vorspannung gehalten sind.

2. Feder-Dämpfungssystem nach Anspruch 1, **dadurch gekennzeichnet, daß** die Feder-Dämpfungs-Kissen (8, 9) aus einem Metallgeflecht mit Fasern aus Litzen gebildet sind.

3. Feder-Dämpfungssystem nach Anspruch 1 oder 2, **dadurch gekennzeichnet, daß** die dem Gegenlager (12) als Steg zugeordneten Endkappen (10, 11) Aufnahmen aufweisen, wobei die Endkappen (10, 11) eine Durchtrittsöffnung (19) unter Bildung eines Abstandes zum Schaft (5) besitzen.

4. Feder-Dämpfungssystem nach einem der Ansprüche 1 bis 3, **dadurch gekennzeichnet, daß** Tellerfedern (9, 10) mit Scheibenelementen (15, 16) am Feder-Dämpfungs-Kissen (8, 9) als Zwischenlagen anliegen.

5. Feder-Dämpfungssystem nach einem der Ansprüche 1 bis 4, **dadurch gekennzeichnet, daß** die Höhe der gebildeten Randzonen der Topfaufnahmen (6, 7) und/oder Endkappen (10, 11) in Anpassung einer geforderten radialen Steifigkeit der Feder-Dämpfungs-Kissen (8, 9) bemessen sind.

## Claims

1. Spring damping system in three axes for load platforms in the form of a support structure in spacecraft for receiving payloads via pallets, wherein a number of spring damping elements are correlated, **characterised in that** the pallet (1) with payloads is arranged above spring damping elements (3) and each spring damping element is formed by bolts (4) which emanate from the support structure (2) and have a shaft (5) which is guided through a receiving aperture in the pallet (1), and there are arranged on the shaft (5) of the bolt (4), between a pot-type receptacle (6, 7) and an end cap (10, 11) in each case, at least two spring damping cushions (8, 9) which are located one behind the other and which are arranged on either side of a countersupport (12) in the receiving aperture and are held on the shaft (5) with an adjustable preload via an externally located adjusting element (17) such as a nut.

2. Spring damping system according to Claim 1, **characterised in that** the spring damping cushions (8, 9) are formed from a metal mesh with fibres made of strands.

3. Spring damping system according to Claim 1 or 2, **characterised in that** the end caps (10, 11) which are correlated, in the form of a web, with the countersupport (12) have receptacles, said end caps (10, 11) possessing a through-aperture (19) while forming a clearance in relation to the shaft (5).

4. Spring damping system according to one of Claims 1 to 3, **characterised in that** plate springs (9, 10) with washer elements (15, 16) bear against the spring damping cushions (8, 9) as intermediate layers.

5. Spring damping system according to one of Claims 1 to 4, **characterised in that** the heights of those edge zones of the pot-type receptacles (6, 7) and/or end caps (10, 11) which are formed are dimensioned to match a required radial stiffness of the spring damping cushions (8, 9).

## Revendications

1. Système d'amortissement à ressort dans 3 axes pour plateformes de chargement en tant que structure de maintien dans des véhicules spatiaux pour la réception de charges utiles par l'intermédiaire de palettes, sachant que plusieurs éléments d'amortissement à ressort sont installés,
**caractérisé en ce que** la palette (1) avec charges utiles est agencée sur des éléments d'amortissement à ressort (3) et que chaque élément d'amortissement à ressort est formé par des axes (4) partant de la structure de maintien (2) et dotés d'une queue (5), qui passe à travers une ouverture de réception de la palette (1) et q u e, sur la queue (5) de l'axe (4), au moins deux coussins d'amortissement à ressort (8, 9) sont respectivement disposés, l'un derrière l'autre, entre un logement (6, 7) et un capuchon final (10, 11), de part et autre d'une butée (12), dans l'ouverture de réception et, par l'intermédiaire d'un élément de réglage (17), tel qu'un écrou, situé à l'extérieur, sont maintenus sur la queue (5) avec une précontrainte réglable.

2. Système d'amortissement à ressort selon la revendication 1,
**caractérisé en ce que** les coussins d'amortissement à ressort (8. 9) sont formés par une tresse métallique avec des fibres de lisses.

3. Système d'amortissement à ressort selon revendication 1 ou 2,
**caractérisé en ce que** les capuchons finaux (10, 11), associés à la butée (12), sont dotées de réceptacles, sachant que les capuchons finaux (10, 11) sont dotés d'une ouverture de passage (19) en formant un intervalle par rapport à la queue (5).

4. Système d'amortissement à ressort selon l'une des revendications 1 à 3,
**caractérisé en ce que** les ressorts à disques (9, 10) portent, en tant qu'intercalaires, contre le coussin d'amortissement à ressort (8, 9) avec des éléments en forme de rondelles (15, 16).

5. Système d'amortissement à ressort selon l'une des revendications 1 à 4,
**caractérisé en ce que** la hauteur des zones marginales des réceptacles (6, 7) et / ou des capuchons finaux (10, 11) sont calculés en adaptation à une rigidité radiale, exigée des coussins d'amortissement à ressort (8, 9).
